# EUROPÄISCHE PATENTANMELDUNG

(11) **EP 4 349 525 A2**
(43) Veröffentlichungstag der Anmeldung: **10.04.2024**
(21) Anmeldenummer: 24151196.3
(22) Anmeldetag: 19.09.2019
(51) Int. Cl.: B23Q 3/00

(54) **VERFAHREN ZUM POSITIONIEREN EINES WERKSTÜCKES UND VORRICHTUNG DAFÜR**

(30) Priorität: 20.09.2018 EP 18195720
(62) Teilanmeldung aus: 19769508.3
(71) Anmelder: Herting, Torsten, 3818 Grindelwald (CH)
(72) Erfinder: Herting, Torsten, 3818 Grindelwald (CH)
(74) Vertreter: AMMANN PATENTANWÄLTE AG

(57) **Zusammenfassung**

Eine Variante eines Verfahrens zum genauen Positionieren eines Werkstücks, insbesondere einer Zahnprothese (1), in einer Werkzeugmaschine besteht darin, an einem bezüglich der Werkzeugmaschine genau positionierbaren Teil einen Abdruck in ebenfalls bekannter Position in der Werkzeugmaschine zu erzeugen, um das Werkstück genau am Abdruck und damit in der Werkzeugmaschine zum Bearbeiten anordnen zu können. Eine Vorrichtung dazu umfasst einen Rohling (3) und ein Gegenstück oder Konter (25), an dem ein Abdruck (20) gebildet wird. Rohling und Konter weisen Schlüsselstrukturen (9, 10; 21, 22) auf, um sie voneinander trennen und reproduzierbar in gleicher Anordnung relativ zueinander wieder verbinden zu können. Eine Alternative auf rechnerischer Basis besteht darin, das Werkstück mit Referenzierkörpern (41) zu versehen, deren Positionen durch Scannen des Werkstücks (1) zu ermitteln, wobei auf der Basis des Scans Bearbeitungsschritte erzeugt werden, und Scannen in einer Werkzeugmaschine des (vorbereiteten) Werkstücks auf einem Rohling mit Schlüsselstrukturen (9, 10), deren Werkzeugmaschinenkoordinaten bekannt sind, um die Lage des Werkstücks in der Werkzeugmaschine sowohl in Werkzeugmaschinen- als auch in Kontruktionssystemkoordinaten zu bestimmen.

## Beschreibung

Die vorliegende Erfindung betrifft Verfahren zum Positionieren eines Werkstücks gemäss Oberbegriff des Anspruchs 1. Des weiteren betrifft Sie eine Vorrichtung zum Positionieren eines Werkstücks gemäss Oberbegriff des unabhängigen Vorrichtungsanspruchs.

Das bevorzugte Einsatzgebiet und der Ausgangspunkt vorliegender Erfindung ist die Herstellung und nachträgliche Veränderung von Zahnprothesen. Die Erfindung ist jedoch anwendbar auf die Herstellung ganz generell von Werkstücken und insbesondere deren nachträgliche Bearbeitung, wie z. B. Motorenteile, Auto-, Flugzeug-, Schiffs-, Maschinen-, Modellbau- und andere Teile, Werkzeuge usw.

Bestehende Zahnprothesen müssen aus verschiedenen Gründen überarbeitet und angepasst werden. Ein häufiger Grund ist die Änderung des Kiefers, die eine Anpassung der Zahnprothese durch eine Unterfütterung erzwingt, das heisst das Auffüllen entstehender Hohlräume zwischen Zahnfleisch und Prothese. Auch nach dem Entfernen eines oder mehrerer Zähne müssen Zähne und / oder Prothesenbasis verändert werden. Halteelemente, wie Klammern, Implantatabutments, Geschiebe müssen verändert und / oder eingearbeitet werden. Im Zuge einer Neuanfertigung muss eine Zahnprothese anprobiert, gegebenenfalls Probe getragen und entsprechend den Rückmeldungen des Patienten korrigiert werden.

Für Änderungen von Zahnprothesen kommen subtraktive (Schleifen, Fräsen) und additive (3D-Druck, insbesondere Metall-Laserschmelzverfahren) Bearbeitungsverfahren zum Einsatz. Bei jedem dieser Verfahren muss die Prothese (oder allgemein ein Werkstück) exakt in einer definierten Position in den Werkstückhalter der jeweiligen Werkzeugmaschine eingesetzt werden. Eine derartige Positionierung in der erforderlichen Genauigkeit (üblicherweise in der Grössenordnung von 0,1 mm oder besser) ist jedoch sehr aufwändig und zeitraubend. Dieses Problem rührt daher, dass Werkzeugmaschinen Bearbeitungsvorgänge gemäss Daten ausführen, die von einer Konstruktionssoftware (CAM-System) oder einer anderen Quelle stammen, ohne dass die Beziehung der Lage der Koordinatensysteme von Werkzeugmaschine und vom CAM-System, dem Konstruktionskoordinatensystem, zueinander bekannt ist.

Eine Aufgabe der vorliegenden Erfindung besteht daher darin, das genaue Positionieren eines Werkstückes in einer Werkzeugmaschine einfacher zu gestalten.

Ein entsprechendes Verfahren ist im Verfahrensanspruch angegeben. Die weiteren Ansprüche geben bevorzugte Ausführungsformen des Verfahren und Vorrichtungen zum Einsatz in diesem Verfahren an.

Bei dem Verfahren wie auch der Vorrichtung wird ausgenutzt, dass es mit geringem Aufwand möglich ist, aufgrund der vorliegenden Konstruktion, das heisst digitalen Daten zur Steuerung einer numerisch gesteuerten (computergesteuerten) Werkzeugmaschine, ein Duplikat des jeweiligen Werkstücks formgetreu aus einem preiswerten Material herzustellen. Das Duplikat wird auf einer Basis oder Plattform hergestellt und bildet mit dieser einen sogenannten Rohling. Von dem Duplikat wird auf einem Gegenstück, dem sogenannten Konter, ein Abdruck erstellt. Der Abdruck kann sich dabei auf ausgewählte Stellen des Duplikats beschränken, die insgesamt hinreichend prägnant sind, so dass beim Entfernen des Duplikats und Wiederaufsetzen auf den Abdruck reproduzierbar das Duplikat bzw. in einem späteren Schritt das Original des Werkstücks in der gleichen Position auf dem Abdruck einrastet. Bei einer Zahnprothese können diese prägenden Stellen hinreichend ausgedehnte Oberflächenabschnitte der Zähne, das heisst deren Kauflächen, aber auch die Unterseite der Prothese oder die Aussenflächen sein. Falls dabei an den Zähnen eine Bearbeitung vorgesehen ist, sind diese natürlich nicht für diese Referenzzonen verfügbar.

Der Konter weist einen Positionierungsabschnitt auf, der bevorzugt ausserhalb des Bereichs liegt, der vom Werkstück abgedeckt wird. In diesem Positionierungsabschnitt sind eine oder mehrere Schlüsselstrukturen angeordnet. Die Schlüsselstrukturen sind derart ausgebildet, dass sie es gestatten, den Konter auf einer Basis, in der Regel einem Rohling, genau in einer vorgegebenen Position anzubringen. Die Gegenstücke zu den Schlüsselstrukturen am Konter, die Rohlingschlüsselstrukturen, werden von der jeweiligen Werkzeugmaschine hergestellt. Ihre Position ist also im Koordinatensystem der Werkzeugmaschine bekannt. Somit ist auch die Position der Schlüsselstrukturen am Konter bezüglich des Abdrucks der Referenz des Werkstücks, insbesondere einer Zahnprothese, bekannt. Insgesamt ist es damit möglich, die Position eines Werkstücks (einer Zahnprothese), das am Rohling oder auch am Abdruck des Konters angebracht ist, sowie die genaue Positionierung des Konters über die Schlüsselstrukturen am Rohling genau bezüglich des Koordinatensystems der Werkzeugmaschine festzulegen. Durch das Fräsen des Duplikates zeigt die Maschine, in welcher Position sie das Werkstück bearbeitet. Durch Verwendung des Konters wird dann das Werkstück in exakt dieser Position fixiert.

Mit diesem Wissen ist es möglich, die Konstruktion in Werkzeugkoordinaten umzurechnen, womit genau an den geplanten Stellen eine definierte Bearbeitung des Werkstücks möglich ist.

Eine andere Möglichkeit, die Koordinatensysteme von Werkzeugmaschine, Konstruktion (CAM-Daten) und Werkstück aufeinander abzubilden, besteht darin, einen Scan des Werkstücks auszuführen, wenn es sich in der Werkzeugmaschine auf einem Rohling befindet, wobei vorgängig Referenziermerkmale an definierten Positionen des Werkstücks und Schlüsselmerkmale am Rohling angebracht werden. Die Schlüsselmerkmale werden dabei jedenfalls von der Werkzeugmaschine erzeugt, wodurch diese vorgegebenen Koordinaten der Werkzeugmaschine entsprechen. Durch die Referenziermerkmale am Werkstück ist eine exakte Erkennung der Lage des Werkstücks im Scan möglich. Alternativ kann auf prägnante Merkmale des Werkstücks selbst zurückgegriffen werden. Oft führt dies jedoch zu einer geringeren Präzision der Erkennung der Lage des Werkstücks im Raum und zu einem erhöhten Rechenaufwand.

Die Erfindung wird weiter an Ausführungsbeispielen unter Bezugnahme auf Figuren erläutert. Es zeigen:
- Figur 1: Draufsicht auf eine Zahnprothese als Prototyp eines Werkstücks;
- Figur 2: Ansicht von unten auf eine Trägerplatte für einen Konter (Gegenstück);
- Figur 3: Draufsicht auf Rohling (Basis) mit Werkstück (Zahnprothese);
- Figur 4: Schnitt gemäss IV - IV in Figur 3;
- Figur 5: Schnitt gemäss V - V in Figur 2 und IV.-IV in Fig. 3 nach Ausbilden des Werkstücknegativs (Prothesenabdruck);
- Figur 6: Schnitt wie Figur 5, Abdruck vom Rohling abgehoben;
- Figur 7: Seitenansicht auf eine reduzierte Prothese;
- Figur 8: Schnitt durch einen Rohling gemäss VIII - VIII in Fig. 13, Raum für Prothese freigelegt;
- Figur 9: Darstellung analog Figur 6, reales Werkstück (Zahnprothese) in Aufnahme gemäss Figur 8 eingelegt und Gegenstück mit Abdruck aufgesetzt;
- Figur 10: Draufsicht auf Zahnprothese mit Referenzierkügelchen;
- Figur 11: Draufsicht auf Rohlingplattform mit Schlüsselstrukturen;
- Figur 12: Virtueller Rohling mit Werkstück;
- Figur 13: Draufsicht auf Rohling mit Aussparung für eine Prothese;
- Figur 14: Draufsicht auf Rohling gemäss Figur 13 mit eingelegter Prothese, Idealposition gem. Fig. 12 gestrichelt;
- Figur 15: Schnitt gemäss XV - XV in Figur 14; und
- Figur 16: Draufsicht analog Figur 14 mit Angabe von Referenzpunkten (schematisiert).

### Erstes Ausführungsbeispiel

Gemäss erstem Ausführungsbeispiel wird ein Werkzeug hergestellt, das es gestattet, eine Zahnprothese oder allgemein ein Werkstück derart in einer Werkzeugmaschine anzuordnen, dass seine Lage exakt mit einer vorhandenen, numerischen Konstruktion übereinstimmt. Die Konstruktion kann für Anpassungen oder Modifizierungen überarbeitet werden, wonach mit Hilfe einer Werkzeugmaschine exakt an den vorgegebenen Stellen am realen Objekt die Änderungen unter numerischer Steuerung vorgenommen werden.

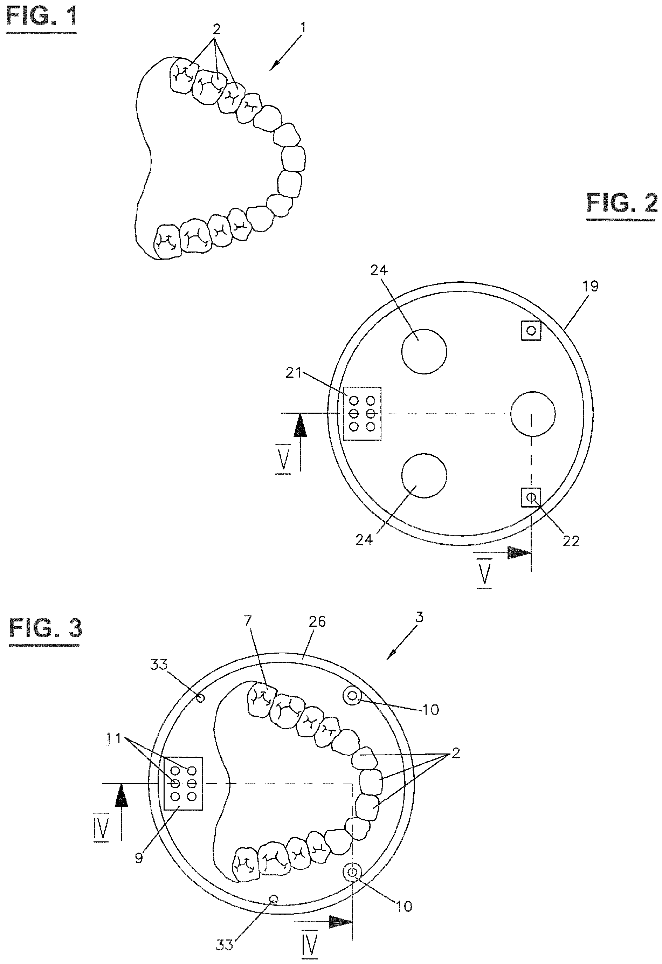

Eine beispielhaft in Figur 1 dargestellte Zahnprothese 1 mit Zähnen 2 (teilweise mit Bezugszeichen versehen) wird eingescannt und in einem geeigneten Konstruktionsprogramm erfasst. Mittels des Konstruktionsprogrammes können die benötigten Änderungen am digitalen Abbild derZahnprothese 1 geplant werden. In einer Werkzeugmaschine (additive oder subtraktive Fertigung) wird ein Rohling 3 erstellt. Der Rohling 3 umfasst eine Plattform 5, auf der eine Teilkopie 7 der Zahnprothese 1 hergestellt wird. Notwendig sind nur die Strukturen zur Referenzierung bzw. zur Fixierung im Konter: i.d.R. die Kauflächen der Prothesenzähne. Ausserhalb des Bereichs der Zahnprothese 7 werden ebenfalls von der Werkzeugmaschine, die das Duplikat 7 herstellt, Schlüsselstrukturen 9 und 10 hergestellt. Die Schlüsselstruktur 9 besteht im Wesentlichen aus einer Anordnung kreisförmiger Noppen 11 (hier sechs Noppen) ähnlich bekannten Steckbausteinen.

Der Rohling (Basis) 3 besteht aus einem formstabilen Material und insbesondere einem Material, das als Bestandteil des Werkstücks nach der Bearbeitung dient. Z. B. kann es sich bei dem Material um rosafarbenen Kunststoff, oft PMMA oder ein anderes physiologisch akzeptables Polymer oder Basismaterial, handeln, der als Unterfütterungsmaterial bei Zahnprothesen eingesetzt wird. Denkbar ist auch Stahl, Kunststoff, Titan, Modellguss, insbesondere faserverstärkter Kunststoff, und Keramik. Ausserdem kann sie die erforderlichen Vorkehrungen (hier nicht dargestellt) wie Nuten, Bohrungen usw. tragen, die benötigt werden, um sie in einer Werkzeugmaschine, bevorzugt in genau festgelegter Position, anzubringen.

Offensichtlich kann ein dazu komplementär ausgebildetes Gegenstück aufgesteckt werden, wodurch eine sehr genaue Positionierung des Gegenstücks auch bezüglich Drehbewegung erzielbar ist. Der zweite Typ Schlüsselstruktur 10 zeigt eine Alternative, wobei mehrere (hier zwei) auf dem Rohling hergestellt werden, die zwar einzeln noch eine Bewegungsfreiheit eines aufgesetzten, komplementär gebildeten Gegenschlüssels gestatten, jedoch in der Gesamtheit ebenfalls eine genaue Positionierung bewirken. Gezeigt sind kreiszylindrische Noppen 11. Wenigstens eine zusätzliche Schlüsselstruktur, die beabstandet von der anderen angeordnet ist, ist jedoch vorteilhaft, um die Genauigkeit der Positionierung zu erhöhen.

Bei den Schlüsselstrukturen 9 und 10 sind vielfältige Formen denkbar, die von den dargestellten abweichen. Essentiell ist dabei, wie unten noch ausgeführt, dass ein daraufgesetztes Gegenstück in genau einer Position und ohne weitere Bewegungsmöglichkeit aufgesetzt werden kann. Naheliegend sind z.B. statt kreiszylindrischen Noppen polygonale oder jedenfalls von der Kreisform abweichende Formen, wie elliptisch und oval. Statt Noppen können auch Vertiefungen, also Bohrungen vorgesehen sein, wonach das Gegenstück entsprechend anstatt Vertiefungen Erhebungen entsprechender Form aufweisen muss oder umgekehrt.

Die Zahl von Noppen ist nicht massgebend. Denkbar ist von mindestens 2 (da bereits zwei Noppen nicht nur eine Verschiebung verhindern, sondern auch eine Drehung), 3, 4, 5, 6, 7, 8 und mehr Noppen, oder auch eine unregelmässige, aber im Wesentlichen nur eine relative Position zu einem Gegenstück zulassende Konfiguration. Denkbar sind auch Noppen, die keinen kreisförmigem Querschnitt aufweisen, wie elliptisch, oval, eiförmig, polygonal (bevorzugt 3-eckig bis 6-eckig, um noch ausgeprägte Ecken und damit hohen Widerstand gegen Verdrehen zu erhalten, wobei höhere Eckenzahlen grundsätzlich denkbar sind, aber einen Übergang zu den Eigenschaften einer Noppe mit kreisförmigem Querschnitt bilden) und die bereits einzeln ein Verdrehen um die Hochachse der Noppe verhindern. Ein Anordnung von mindestens 2 Noppen ist bezüglich Verdrehsicherung vorzuziehen, und eine Mehrzahl von Noppen bietet grundsätzlich eine höhere Präzision der Positionierung auf einem Gegenstück durch ein grösseres Verhältnis zwischen wirksamer Fläche der Schlüsselstruktur (Noppenanordnung) und der Gesamtfläche des Rohlings bzw. der Prothese, bzw. des maximalen Durchmessers (bspw. die Entfernung der Mitten [Schwerpunkte] der am weitesten entfernt voneinander angeordneten Noppen) der Schlüsselstruktur zu dem grössten Durchmesser der Prothese oder des Rohlings insgesamt (hier wegen der Kreisform: sein Durchmesser). Entsprechend dient auch die Anordnung von mehr als einer Schlüsselstruktur, hier prototypisch der Schlüsselstruktur 9 und der einfacheren ausgeführten Schlüsselstrukturen 10 der Vergrösserung dieses Verhältnisses und damit der genaueren Positionierung.

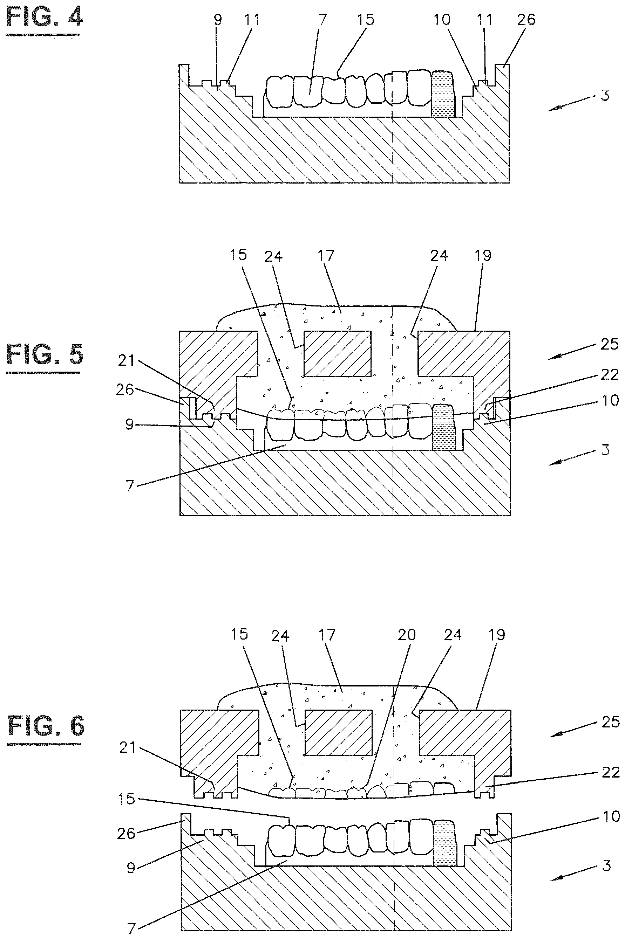

Die Prothese oder allgemein das Werkstück muss auch nicht vollständig dupliziert werden, es genügt vielmehr hinreichend viele, prägnante Teile auszubilden, dass das Originalteil in einem von dem Duplikat angefertigten Abdruck genau und eindeutig positioniert werden kann. Wie in Figur 4 sichtbar, können dies insbesondere eine genügend grosse Anzahl von Kauflächen des Duplikats 7 bzw. der Zahnprothese 1 sein. Nicht verwendbar sind offensichtlich diejenigen Gebiete, die zur Bearbeitung vorgesehen sind.

Auf den Rohling 3 wird eine geeignete Abgussmasse 17 (Gips; thermoplastisches oder dauerhaft härtbares (z.B. durch Vernetzen) polymeres Material) und ein Referenzierschlüsselhalter 19 aufgebracht (siehe Figur 5).

Der Referenzierschlüsselhalter 19 (siehe Figur 2) weist zum einen Schlüsselstrukturen 21, 22 auf, die komplementär zu den Schlüsselstrukturen 9, 10 des Rohlings ausgebildet sind. Die Durchbrüche 24 dienen dazu, durch Hindurchtreten des Abdruckmaterials 17 den ausgehärteten Abdruck am Referenzschlüsselhalter 19 zu verankern. Nach dem Aushärten des Abdruckmaterials 17 liegt ein sogenannter Konter 25 oder ein Gegenstück vor, das im Wesentlichen aus dem Referenzschlüsselhalter 19 und dem ausgehärteten Abdruckmaterial 17 besteht und an seiner Oberfläche wenigstens in Teilen ein exaktes (negatives) Abbild 20 der Oberfläche des Duplikats 7 aufweist. Wie in Figur 4 dargestellt, liegt der Referenzschlüsselhalter 19 auf Anschlag auf dem Rohling auf und insbesondere die Schlüsselstrukturen 9, 10 bzw. 21, 22 greifen ineinander ein, so dass der Konter 25 genau in dieser Position wieder auf dem Rohling angebracht werden kann. In der Figur ist verdeutlichet, dass der Abstand durch die Höhe des Rands 26 vorgegeben ist, so dass die Schlüsselstrukturen zwar genügend hoch sein müssen, um ineinander einzugreifen, aber den Abstand von Rohling 3 und Referenzschlüsselhalter 19 nicht bestimmen.

Denkbar ist jedoch, dass die Schlüsselstrukturen 9, 10 und 21, 22 auch den Abstand zwischen Rohling 3 und Referenzierschlüsselhalter 19 festlegen, also auf Anschlag aneinander anliegen. Der Rand 26 kann jedoch dann immer noch als umlaufende Erhebung vorhanden sein, z. B. um das Auslaufen von Fixiermittel 29 (s.u.) aus dem Rohling 3 zu verhindern.

Für das Material des Referenzschlüsselhalters gelten dieselben Überlegungen wie für den Rohling 3 weiter oben angestellt.

Figur 6 stellt den Konter 25 vom Rohling 3 abgehoben dar.

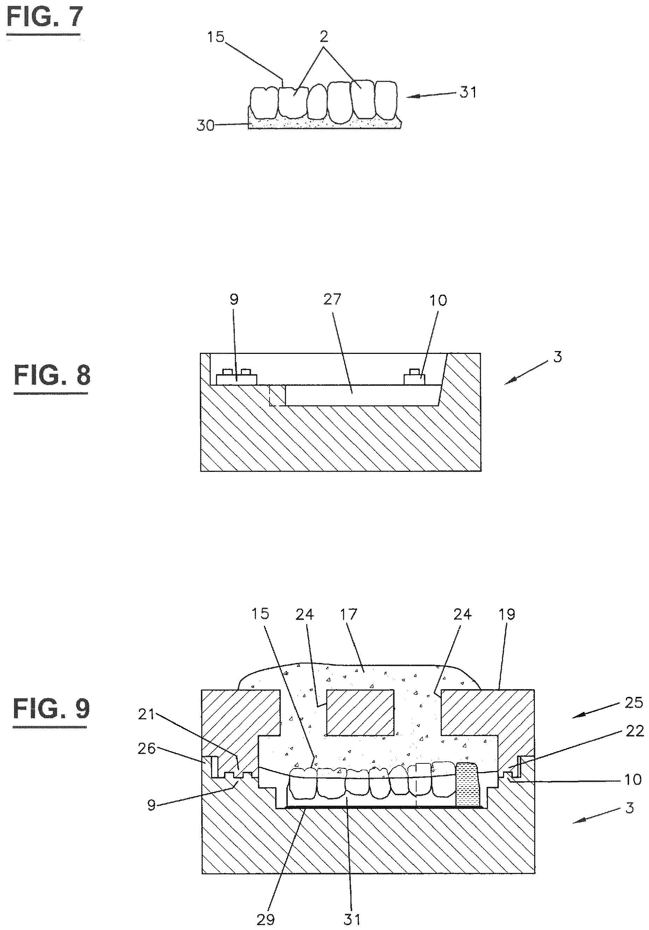

Das Duplikat 7 wird abgetragen um einen Freiraum 27 zur Aufnahme der Zahnprothese 1 zu erhalten. In den Freiraum 27 wird ein fliessfähiges Material 29 in geeigneter Menge eingebracht. Dieses Material 29 kann ein Konstruktionsmaterial sein, das dazu dient, später einen Teil der Prothese 1 darzustellen. Denkbar ist auch ein anderes geeignetes Material, das geeignet ist, die Prothese 1 an den Abdruck 20 im Konter 25 anzupressen. Vorliegend wird beispielhaft die Zahnprothese 1 wie in Figur 7 dargestellt bis zu den Zähnen 2 reduziert, das heisst auf jeden Fall das gesamte Unterfütterungsabdruckmaterial abgetragen. Die reduzierte Prothese, die unten plan abgefräst ist, kann auf dem Rohling 3 mit einem Klebstoff als Fixiermittel 29 befestigt werden, der selbst als Material der Zahnprothese dient. Der Rohling 3 besteht dabei ebenfalls aus Imitatmaterial. Bekannt ist für diesen Zweck Polymethylmethacrylat, das geeignet eingefärbt ist, um als Gingivaimitat zu dienen. Durch Aufsetzen des Konters 25 wird die Prothese 1 in der durch den Abdruck 20 festgelegten Position fixiert, bevor sich das Fixiermittel verfestigt und damit die Prothese auf dem Rohling 3 fixiert.

Auf dem Rohling 3 kann auch eine grössere Menge Gingivaimitatmaterial als Fixiermittel 29 im Freiraum 27 im Übermass eingefüllt und die (reduzierte) Prothese 31 aufgelegt werden. Der Konter 25 wird aufgesetzt, wobei die reduzierte Prothese 31 in das Fixiermittel 29 eingedrückt wird, das hier gleichzeitig als Rohmaterial für das Imitat der Gingiva an der Zahnprothese dient.

Fixiermaterial in grösseren Schichtdicke dient generell dazu, die Prothese an und sogar in das Abdruckmaterial zu drücken, wobei Abweichungen der anliegenden Oberflächen ausgeglichen werden, und dort zu halten, bis das Fixiermittel verfestigt ist. Das Fixiermittel 29 ist wenigstens zähflüssig bis knetartig. Denkbar ist auch ein thixotropes Material oder ein anderes Material, das unter einem äusseren Einfluss wie einer mechanischer Belastung, z.B. Vibrieren oder Verschieben, bei Erwärmen oder Bestrahlen an Viskosität verliert bzw. überhaupt sich hinreichend verflüssigt und selbsttätig wieder in einen festen Zustand übergeht. Regelmässig, und insbesondere dann, wenn das Fixiermittel einen Teil der bearbeiteten Prothese bildet, wird eine irreversible Härtung oder Verfestigung vorgenommen, z.B. eine Polymerisierung oder Vernetzung. Letzteres kann durch Erwärmen, Bestrahlung (elektromagnetische Strahlung wie Licht, Mikrowellen, Röntgen, Korpuskularstrahlung (Elementarteilchen, wie Elektronen) oder Kombinationen daraus erzielt werden. Denkbar ist auch eine zeitgesteuerte Aushärtung durch verzögerte Aktivierung eines zugesetzten Katalysators für die Polymerisierung.

Wie in Figur 9 verdeutlicht, befindet sich nun einerseits die Prothese 1 in einer genau definierten Lage auf dem Konter 25 durch die exakte Passung am Abdruck 20, hier durch wenigstens einen Teil der Kauflächen 15, und andererseits befindet sich auch der Konter 25 selbst durch den passgenauen Sitz der Schlüsselstrukturen 9, 11 bzw. 21, 22 relativ zum Rohling 3 in einer genau definierten Position. Insgesamt befindet sich damit die Zahnprothese 1 in genau der Position, in der auf dem Rohling 3 das Duplikat 7 der Zahnprothese 1 angefertigt wurde.

Für die weitere Bearbeitung kann der Konter 25 in einer denkbaren Variante mit der daran auf geeigneter Art vorübergehend befestigten reduzierten Zahnprothese und dem daran anhaftenden Polymermaterial, dem Fixiermittel 29, das hier jedoch keine besondere Haftwirkung zum Rohling 3 aufweist, vom Rohling 3 abgehoben und mittels des Referenzschlüsselhalters 19 in einer Werkzeugmaschine positioniert werden. Die Befestigung der Prothese 1 am Konter 25 kann z.B. durch einen Klebstoff (allgemein eine haftvermittelnde Substanz) erfolgen, der vorgängig auf wenigstens einem Teil der Kontaktzonen zwischen Abdruck 20 und Prothese 1 aufgetragen wird. Im Hinblick auf die Stärke der Haftvermittlung ist wenigstens ein solcher Bereich zu bedecken, dass die Anforderungen nachfolgender Bearbeitungsschritte erfüllt werden. Im einfachsten Fall wird die gesamte Kontaktfläche des Abdrucks 20 mit Klebstoff versehen. Der Klebstoff ist geeignet gewählt, um nach Bearbeitung aufgelöst, geschwächt (z.B. durch Erwärmen) oder anderweitig genügen unwirksam oder zerstört zu werden, dass die Prothese vom Konter 25 entfernt werden kann, ohne Schaden zu nehmen. Es ist auch eine subtraktive Bearbeitung der Klebeflächen durch die Maschine möglich (abschleifen).

Denkbar ist, den Klebstoff durch Einwirken eines Lösungsmittels zu entfernen, z.B. durch Eintauchen in ein Lösungsmittel. Eine weitere Möglichkeit ist eine starke Temperaturänderung, also Erwärmen oder auch Abkühlen, in einen Temperaturbereich, in der der Klebstoff Zusammenhalt oder Haftkraft oder beides wenigstens teilweise verliert.

Bevorzugt wird jedoch der Konter 25 nach Aushärten des Fixiermittels 29 abgehoben. Der Rohling 3 mit Prothese 1 wird auf eine an sich bekannte Art in der Werkzeugmaschine zur Bearbeitung fixiert.

Da sich nun die Prothese 1 innerhalb der Werkzeugmaschine in einer Position befindet, deren Koordinaten innerhalb der Werkzeugmaschine bekannt sind, kann eine Bearbeitung des Gingivaimitats erfolgen, ohne die Prothese zu beschädigen.

Soll dagegen eine Änderung an den Kauflächen 15 der Zahnprothese 1 durchgeführt werden, so kann das Fixiermittel 29 als stabile, aber später wieder auflösbare Verbindung zum Rohling 3 ausgelegt sein. Durch die oben genannte genaue Positionierung aller Teile gemäss Figur 9 ist nun auch die Prothese auf dem Rohling 3 genau positioniert und kann damit in einer Werkzeugmaschine genau bearbeitet werden, da die Koordinaten des Scans der Prothese gemäss Figur 1 in die Koordinaten der Werkzeugmaschine umgerechnet werden können.

Falls die genaue Anordnung des Konters 25 bzw. des Rohlings 3 mit der Prothese 1 in der Werkzeugmaschine problematisch ist, besteht die Möglichkeit, diese ohne genaue Positionierung an der Werkzeugmaschine anzubringen. Wenn die Sollposition der Schlüsselstrukturen 9,10 oder 21, 22 in Maschinenkoordinaten nicht bekannt sind oder die Schlüsselstrukturen nicht zur genauen Positionsbestimmung, z.B. durch Einscannen, geeignet sind, können an vorgegebenen Positionen Maschinenreferenzierungsmarken 33 angebracht werden, z. B. kleine Löcher. Dann wird der Rohling 3 bzw. der Konter 25 gescannt. Aus der relativen Position der Maschinenreferenzmarkierungen 33 und der Schlüsselstrukturen 9, 10 oder 21, 22 kann eine Abbildungsfunktion der Konstruktionsdaten auf die Maschinenkoordinaten erstellt werden. Im Resultat ist es damit möglich, die Konstruktionsdaten, die anhand des eingangs genannten Scans der Prothese 1 aus Figur 1 erstellt wurden, genau auf die reale Position der Prothese 1 in der Werkzeugmaschine abzubilden - die Prothese 1 ist im Träger bzw. Konter 25 exakt an der Position des Duplikats positioniert - und damit numerisch die Werkzeugmaschine genau zu den vorgesehenen Bearbeitungsvorgängen an der Prothese 1 anzusteuern.

### Zweites Ausführungsbeispiel

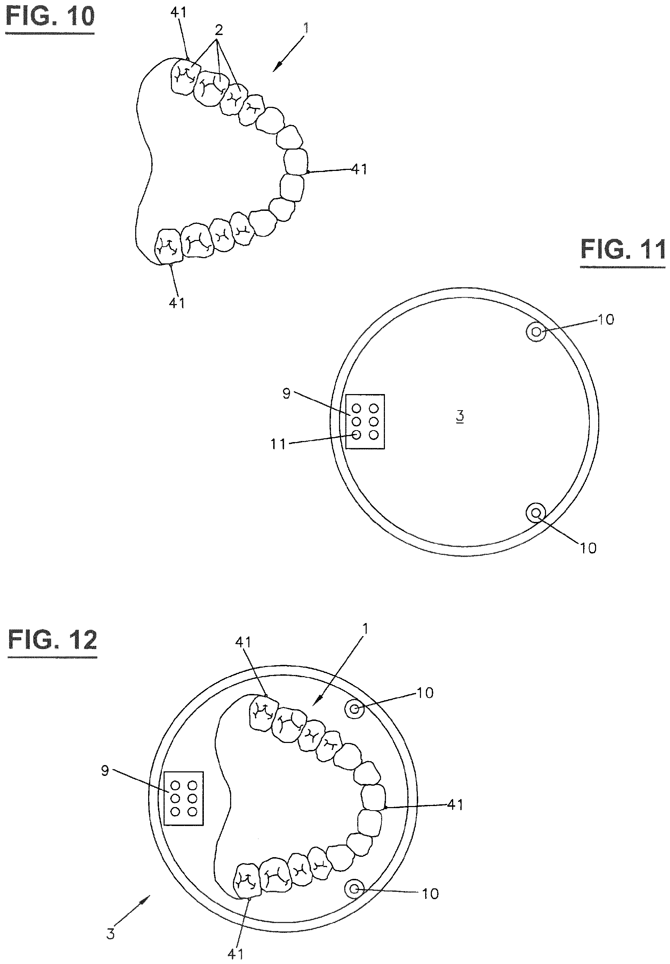

Wie in Figur 10 gezeigt, werden an der Prothese 1 Referenzierkörper 41 (hier: Kügelchen) aufgeklebt, zum Beispiel mit Wachs. Aus Gründen der Präzision werden die Referenzierkügelchen 41 an möglichst weit entfernten Punkten angebracht, im Beispiel an einem der Frontzähne und an den am weitesten hinten liegenden Backenzähnen. Kügelchen, also kleine Kugeln, haben den Vorteil, dass sie in beliebiger Position angeklebt werden können und aus allen Raumrichtungen das gleiche Bild bieten. Denkbar sind jedoch auch andere kleine Körper, die gut erkennbar sind und deren Lage im Raum sich genau bestimmen lässt. Sie sollten gross genug sein, um noch gut erkennbar zu sein, andererseits auch klein genug, um einfach anklebbar zu sein und die weiteren Schritte nicht zu stören. Bevorzugt sind Grössen (Durchmesser) im Bereich weniger Millimeter, z.B. 1 mm - 5 mm, bevorzugt 1 mm. Als Material für die Kügelchen, oder allgemein Körper, kommt eines in Frage, das gut scanbar ist, also einen klaren Kontrast und scharfe Konturen liefert. Je nach Hintergrund empfiehlt sich weiss oder schwarz, gegebenenfalls auch eine zum Hintergrund einen hohen Kontrast bildende Farbe. Eine matte Oberfläche ist von Vorteil, um Reflexe aus der Umgebung zu unterdrücken.

Die Referenzierkügelchen 41 (oder allgemeiner Referenzierkörper oder -markierungen) müssen offensichtlich an genügend verschiedenen Orten angebracht sein (bevorzugt in möglichst grossem Abstand voneinander), dass sie sich unterscheiden lassen, also mit hinreichender Auflösung Länge und Lage einer Strecke im Raum bestimmbar ist, die die Kügelchen verbindet. Weitere Kügelchen dürfen generell nicht auf einer bereits gegebenen Verbindung zweier Kügelchen liegen, oder in einer von drei anderen Kügelchen gebildeten Ebene bei mindestens 4 Kügelchen. Generell besteht also ein Basissatz von Referenziermerkmalen aus Merkmalen, von denen keines Teil eines geometrischen Objekts (Strecke, Polygon) ist, das durch eine beliebige Untermenge der anderen Referenziermerkmale definiert ist. Denkbar ist jedoch, zusätzliche, eigentlich redundante Kügelchen anzubringen, die der Erhöhung der Messgenauigkeit dienen, z.B. durch Mittelwertbildung, oder als Sicherheit für den Fall, dass eines der Kügelchen abfällt.

Denkbar ist, als Referenziermarkierung einen Oberflächenabschnitt der Prothese einzusetzen, der genügend charakteristisch ausgebildet ist. um mit Bilderkennungsverfahren erkannt und genau lokalisiert zu werden.

Die Prothese 1 mit Referenzierkügelchen 41 wird eingescannt. Anhand der eingescannten Daten, die das Erstellen eines virtuellen Duplikats gestatten, werden die benötigten Bearbeitungsschritte in einer geeigneten Konstruktionssoftware wie ein CAM-System festgelegt. Im wesentlichen wird dabei ein virtuelles Bild (s. Fig. 12) des Rohlings 3 mit Prothese 1, dem Werkstück, und zusätzlich den Schlüsselstrukturen 9, 10 wie auch den Referenzierkörpern 41 erstellt. An diesem Bild werden die Bearbeitungsschritte festgelegt.

Ein Rohling 3 (Figur 11) wird in der Werkzeugmaschine mit Schlüsselstrukturen 9, 10 versehen. Im Gegensatz zum 1. Ausführungsbeispiel dienen die Schlüsselstrukturen jedoch als Maschinenreferenzmarkierung zur Bestimmung der Lage des Koordinatensystems der Werkzeugmaschine, da sie an den Orten gebildet werden, die vom CAM-System vorgegebenen Daten entsprechen. Bevorzugt sind Strukturen, die gut in einem Scan sichtbar und eine hohe Präzision der Bestimmung der Position gestatten. Neben den beispielhaft gezeigten Formen, die im wesentlichen denjenigen des 1.

Beispiels entsprechen, kann eine solche Maschinenreferenzmarkierung einfach aus einem Loch (Durchmesser beispielsweise maximal 5 mm, bevorzugt höchstens 3 mm) bestehen. Vorteilhaft können auch Erhebungen sein, z. B. kegelförmige oder pyramidale, wobei die jeweilige Spitze durch Schneiden der Flanken genauer bestimmt werden kann. Für eine Unterscheidung können Anordnungen oder unterschiedliche Arten verwendet werden, wie in den Figuren die Struktur 9, die sich von den Strukturen 10 unterscheidet.

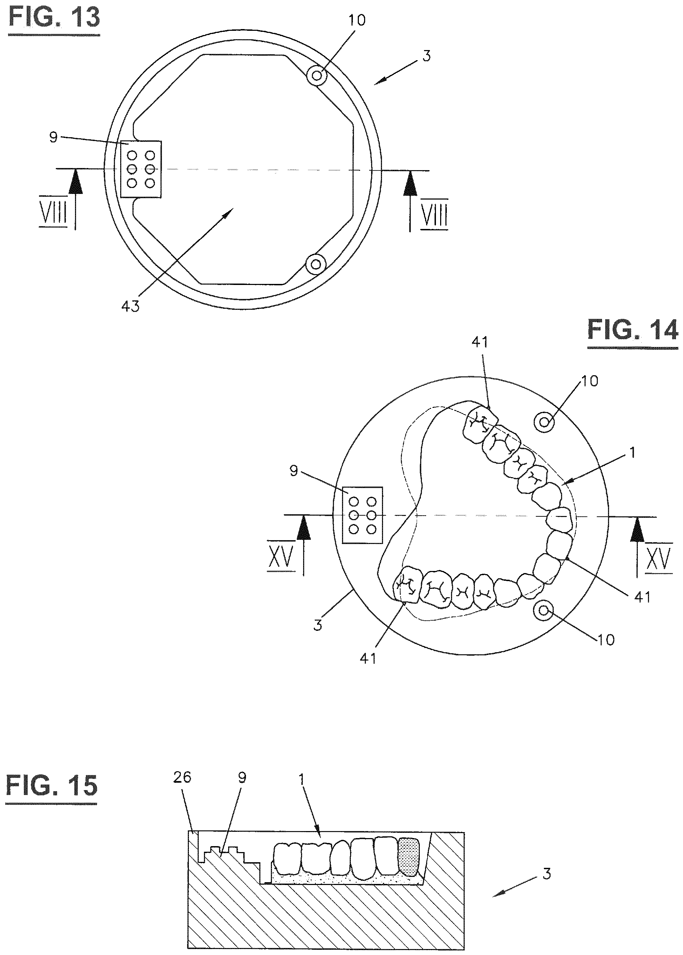

Der Rohling 3 wird, wenn nötig, mit einer freigelegten Fläche 43 versehen, auf der die Zahnprothese 1 angeordnet werden kann (siehe Figur 14).

Die Prothese 1 wird wie beim 1. Ausführungsbeispiel auf dem Rohling angebracht, entweder in der Fläche 43 oder nach Entfernen (z.B. durch Fräsen) des Duplikats 7 wie in Figur 12 dargestellt.

Auf der Fläche 43 wird die Zahnprothese 1 aufrecht wie in Figur 15 dargestellt oder auch mit der Unterseite nach oben befestigt, je nachdem ob die Oberseite oder die Unterseite bearbeitet werden muss, oder es wird wie oben beschrieben der Konter 25 eingesetzt, um die Unterseite bearbeiten zu können.

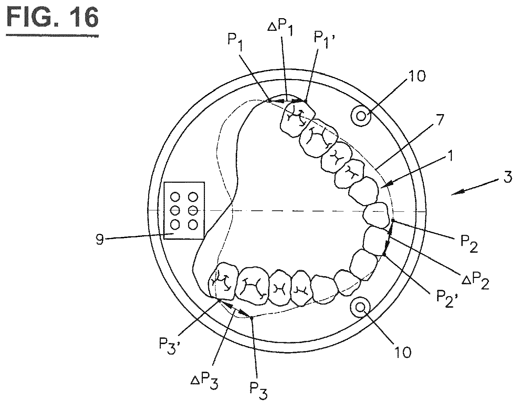

Wie in Figur 14 übertrieben dargestellt, stimmt die Lage der Prothese auf dem Rohling 3 mit Sicherheit nicht, oder wenigstens nicht genau genug, mit der Position gemäss Konstruktion (siehe Figur 12) überein, die in einer unterbrochenen Linie als Kontur des Duplikats 7 angedeutet ist. Die Lage der Prothese 1 auf dem Rohling 3 kann jedoch nun durch einen erneuten Scan insbesondere der Referenzierkügelchen 41 erfasst werden. Wie in Figur 16 dargestellt, kann nun jeweils die Verschiebung ΔP1, ΔP2, ΔP3 der Konstruktionspunkte (hier drei, nämlich P1, P2 und P3) gegenüber den an der realen Prothese 1 gemessenen Positionen (P1', P2', P3') ermittelt werden. Mit der Randbedingung, dass die Grösse der Konstruktion, also die relative Lage der Punkte P1 - P3 bzw. P1' - P3' zueinander identisch ist, genügen 3 Punkte, um die Konstruktion auf die Lage der realen Prothese gemäss 14 umzurechnen.

Vorstellbar ist dies schematisch z.B. durch folgendes Verfahren:
1. Punkt P1 wird auf P1' verschoben;
2. es folgt eine Drehung um eine Achse durch P1' (ist gleich P1), wobei die Drehachse senkrecht auf einem Dreieck steht, das durch P1', P2 und P2' gebildet wird. Durch diese Drehung wird Punkt P2 auf P2' gedreht, so dass P2 gleich P2' nach dieser Operation gilt;
3. eine Drehung um eine Achse durch P1' und P2' folgt, wobei P3 auf P3' bewegt wird.

Dabei werden auch Veränderungen senkrecht zu Zeichenebene, also real der Oberfläche der Plattform 5, berücksichtigt- Die Lagedifferenzen ΔP1 , ΔP2, ΔP3 können also auch eine Komponente senkrecht zur Zeichenebene enthalten.

Verschiedene Massstäbe beim Scannen der Prothese 1 gemäss Figur 10 und der Prothese 1 auf Rohling 3 gemäss Figur 14 können berücksichtig werden, indem die Distanzen zwischen den Referenzkügelchen jeweils bestimmt und ins Verhältnis gesetzt werden. Dabei wird vorausgesetzt, dass der unterschiedliche Massstab in alle Raumrichtungen gilt.

Die vorgenannten Verfahren erlauben es, die erforderliche Präzision jedenfalls für die Nachbearbeitung von Zahnprothesen einzuhalten. Diese liegen in der Regel bei einer Bestimmung der Bearbeitungskoordinaten mit einer Toleranz von heutzutage ca. 30 µm (0,03 mm). Als untere Grenze der Verarbeitungsgenauigkeit kann eine Abweichung von höchstens 0,5 mm angesehen werden, besser und für die Praxis eher tauglich sind Abweichungen von höchstens 0,2 mm und insbesondere 0,1 mm.

Eine interessante Anwendung dieses Verfahrens, um ein Nachbearbeiten einer Prothese oder allgemein eines Werkstücks ohne seine Schädigung zu ermöglichen, liegt in seinem Einsatz bei der Herstellung. Gerade bei den additiven Bearbeitungsverfahren (3D-Druck) besteht ein grosses Preisgefälle zwischen Werkzeugmaschinen, die die erforderliche Endpräzision aufweisen, und solchen mit unzulässig hohen Toleranzen. Mithilfe obigen Verfahrens ist es denkbar, ein Werkstück, insbesondere ein zahntechnisches oder sonstiges Modell, zunächst mit einer Werkzeugmaschine geringerer Genauigkeit und entsprechendem Übermass herzustellen und das Produkt dann in einer Werkzeugmaschine, in der Regel einer Werkzeugmaschine der subtraktiven Fertigung wie einer Fräse, nachzuarbeiten, wobei die exakte Position des Werkstücks in der Fräse mit dem vorliegenden Verfahren ermittelt wird.

Die Datenverarbeitungsschritte in der vorangehenden Beschreibung werden bevorzugt automatisiert auf einem Computer oder Prozessor auf der Grundlage eines Programms ausgeführt. Insbesondere gilt das für die Umrechnung der gescannten Bilder in die Darstellung des CAM-Systems und die Umrechnung der CAM-Daten auf das Koordinatensystem der realen Prothese bzw. des realen Werkstücks in der Position, die es im Rohling und in der Werkzeugmaschine einnimmt.

Aus der vorangehenden Beschreibung der Ausführungsbeispiele sind dem Fachmann vielfältige Abwandlungen und Ergänzungen zugänglich, ohne den Schutzbereich der Erfindung zu verlassen, der durch die Ansprüche definiert ist. Einige denkbare Varianten sind in der Beschreibung der Ausführungsbeispiele erwähnt.

Denkbar ist auch:
- Die Erfindung wird bei der Nachbearbeitung von beliebigen Werkstücken angewendet.
- Der Rohling wird nicht zu einem Teil des Werkstücks und dient damit ausschliesslich als Basis. Er kann also aus einem Material bestehen, das ihn als Werkstückhalter in dem angewendeten Bearbeitungsverfahren besser geeignet macht.
- Der Abstand der Schlüsselstrukturen bzw. der Maschinenreferenzmarkierungen beträgt mindestens 113 eines grössten Durchmessers des Werkstücks in der Projektion auf den Rohling bzw. die Basis.

## Patentansprüche

1. Verfahren zum Positionieren eines Werkstücks (1) als Vorbereitung der Bearbeitung in einer numerisch gesteuerten Werkzeugmaschine, **dadurch gekennzeichnet, dass**
das Werkstück mit einer Anzahl Referenzmarkierungen (41) versehen wird und/oder Referenzmarkierungen aus am Werkstück vorhandenen Strukturen ausgewählt werden, die die Bestimmung der Lage und Position des Werkstück mindestens in einer Ebene, bevorzugt im Raum, gestatten,
das Werkstück für die Bearbeitung an einer Basis (3) angebracht wird,
die Werkzeugmaschine an der Basis eine Anzahl Schlüsselmarkierungen (9, 10) gemäss Daten in einem Konstruktionskoordinatensystem anbringt,
wenigstens die Referenzmarkierungen und die Schlüsselmarkierungen eingescannt werden, um Positionsdaten zu erhalten, und
mittels der Positionsdaten die Daten für die Bearbeitung des Werkstücks in einem Konstruktionskoordinatensystem von einem Computer unter Kontrolle eines Programms in Daten zur Steuerung der Werkzeugmaschine umgerechnet werden,
so dass Änderungen am Werkstück, die im Konstruktionskoordinatensystem definiert sind, am Werkstück durch die Werkzeugmaschine vornehmbar sind.

2. Verfahren gemäss Anspruch 1 **dadurch gekennzeichnet, dass** mindestens zwei, bevorzugt mindestens drei an unterscheidbaren Orten angeordnete Referenzmarkierungen (41) am Werkstück (1) angebracht und/oder ausgewählt werden, bevorzugt in Form von Körpern und weiter bevorzugt als Referenzierkügelchen am Werkstück angebracht werden.

3. Verfahren gemäss einem der Ansprüche 1 bis 2, **dadurch gekennzeichnet, dass** jede Schlüsselmarkierung (9, 10) aus mindestens einer der folgenden Vorkehrungen besteht:
- ein Loch, bevorzugt ein Loch von maximal 5 mm, bevorzugt von maximal 3 mm Durchmesser;
- ein Kegel
- eine Pyramide.

4. Verfahren zum Positionieren eines Werkstück (1) in einer numerisch gesteuerten Werkzeugmaschine, **dadurch gekennzeichnet, dass**
an einem als eine Basis (3) dienenden Rohling ein wenigstens einen Teil des Werkstücks umfassendes Duplikat (7) von der Werkzeugmaschine unter der Kontrolle von ersten Daten ausgebildet wird,
in einem Positionierungsabschnitt des Rohlings mindestens eine Schlüsselstruktur (9, 10) ausgebildet wird,
ein Gegenstück (25) mit Abdruckmasse (17) auf die Basis aufgesetzt wird, wobei mindestens eine Schlüsselstruktur (9, 10) an der Basis und jeweils eine komplementär ausgebildete Schlüsselstruktur (21, 22) am Gegenstück in Eingriff gebracht wird, so dass sich Basis und Gegenstück in vorgegebener relativer Lage zueinander befinden und in der Abdruckmasse ein Negativ der Oberfläche des Duplikats gebildet wird, und
aus der Basis das Duplikat entfernt wird,
so dass das Gegenstück reproduzierbar in gleicher relativer Lage an der Basis anbringbar ist und das Werkstück reproduzierbar in der Position entsprechend den ersten Daten am Rohling durch Einpassen in das Negativ anbringbar ist.

5. Verfahren gemäss Anspruch 4, **gekennzeichnet durch** die anschliessenden Schritte:
das Werkstück (1) wird auf der Basis (3) an der Stelle des entfernten Duplikats (7) angeordnet,
das Gegenstück (25) wird unter Eingreifen der mindestens einen Schlüsselstruktur (9,10) der Basis (3) mit der mindestens einen Schlüsselstruktur (20, 21) am Gegenstück angebracht, wobei das Werkstück so ausgerichtet wird, dass die Abschnitte des Werkstück (1), die im Abdruck (20) negativ ausgebildet sind, in den Abdruck passen,
um das Werkstück in derselben Position auf der Basis anzuordnen wie das Duplikat.

6. Verfahren gemäss Anspruch 5, **gekennzeichnet durch** die weiteren Schritte:
vor dem Aufsetzen auf die das Werkstück (1) tragende Basis (3) wird wenigstens einer von einem wirksamen Teil des Abdrucks (20) und einem wirksamen Teil des Bereichs des Werkstücks (1), die dem Abdruck (20) entspricht, mit einer haftvermittelnden Schicht versehen, so dass das Werkstück am Abdruck mit genügender Festigkeit haftet, um an dem nicht vom Abdruck bedeckten Teil bearbeitet zu werden.

7. Verfahren gemäss einem der Ansprüche 5 bis 6, **dadurch gekennzeichnet, dass** das Werkstück (1) auf der Basis (3) mittels eines haftvermittelnden Materials (29) angebracht wird und das haftvermittelnde Material zu einer Verbindung zwischen Basis (3) und Werkstück verfestigt wird.

8. Verfahren gemäss Anspruch 7, **dadurch gekennzeichnet, dass** das haftvermittelnde Material (29) geeignet ist, einen Teil des bearbeiteten Werkstücks zu bilden.

9. Verfahren gemäss einem der Ansprüche 4 bis 8, **dadurch gekennzeichnet, dass** die Schlüsselstrukturen (9, 10, 20, 21) ausgebildet sind, dass beim Trennen und Wiederverbinden von Basis (3) und Gegenstück (25) eine maximale Verschiebung von 0,5 mm, bevorzugt von maximal 0,2 mm, und besonders bevorzugt von maximal 0,1 mm des Werkstücks (1) oder seines Duplikats (7) vor und nach dem Trennen und Wiederverbinden eingehalten wird.

10. Verfahren gemäss einem der Ansprüche 1bis 9, **dadurch gekennzeichnet dass** die Schlüsselmarkierungen (9,10) ausserhalb der vom Werkstück eingenommene Fläche auf der Basis (3) ausgebildet werden.

11. Vorrichtung zum Positionieren eines Werkstücks (1) in einer numerisch gesteuerten Werkzeugmaschine, **dadurch gekennzeichnet, dass**
die Vorrichtung eine Basis (3) und ein Gegenstück (25) umfasst,
Basis und Gegenstück lösbar miteinander verbindbar sind, wobei zwischen Basis und Gegenstück im miteinander verbundenen Zustand das Werkstück angeordnet werden kann,
die Verbindung zwischen Basis und Gegenstück eine Einrichtung (9, 10; 21, 22) aufweist, die reproduzierbar ein Verbinden von Basis und Gegenstück in vorgegebener Position relativ zueinander sicherstellt, und
das Gegenstück eine wenigstens zu einem Teil des Werkstücks komplementär ausgebildete Referenzierzone aufweist, die die reproduzierbare Anbringung des Werkstücks an einer vorgegebenen Position am Gegenstück sicherstellt.

12. Vorrichtung gemäss Anspruch 11, **dadurch gekennzeichnet, dass** die Schlüsselstrukturen komplementär an Basis (3) und Gegenstück (25) ausgebildete Erhebungen und Vertiefungen umfassen, die beim Verbinden von Basis und Gegenstück ineinander eingreifen und in derartiger Zahl und Form vorhanden sind, dass eine Bewegung von Basis und Gegenstück relativ zueinander auf die Bewegung zum Verbinden und Trennen beschränkt ist.

13. Vorrichtung gemäss Anspruch 12, **dadurch gekennzeichnet, dass** sich die Schlüsselstrukturen durch säulenförmige Noppen auszeichnen, die mit Wänden der komplementär ausgebildeten Schlüsselstruktur beim Zusammensetzen von Basis (3) und Gegenstück (25) in gleitenden Kontakt treten, so dass eine Bewegung quer zur Längsachse der Säulen verhindert ist.
